# EUROPEAN PATENT APPLICATION

(11) **EP 4 685 731 A1**
(43) Date of publication of application: **28.01.2026**
(21) Application number: 25190665.7
(22) Date of filing: 21.07.2025
(51) Int. Cl.: G06Q 90/00

(54) **SYSTEM AND METHOD FOR GUIDING VISITORS IN AN ENVIRONMENT**

(30) Priority: 24.07.2024 US 202418782078
(71) Applicant: Honeywell International Inc., Charlotte, NC 28202 (US)
(72) Inventor: D, Sivasanthanam, Charlotte, 28202 (US); A, Ramkumar, Charlotte, 28202 (US); JOSEPH, Jeslin Paul, Charlotte, 28202 (US)
(74) Representative: Haseltine Lake Kempner LLP

(57) **Abstract**

Systems and methods for guiding visitors to their intended destinations within an environment are provided. The system comprises a processor and an AI engine. The processor receives a visitor request comprising information about a destination in the environment. The processor determines a current location of the visitor. Further, the processor obtains a current status of one or more access points associated with the environment. Further, the processor provides the information about the destination, the current location of the visitor, and the current status of the one or more access points as an input to the AI-engine. Further, the processor receives a route to the destination of the visitor from the AI engine. Further, the processor provides, using at least one multimedia output, the route on a user device of the visitor.

## Description

### TECHNICAL FIELD OF THE INVENTION

The present subject matter relates to guidance systems and, more particularly, to visitor guidance systems for guiding visitors to their intended destinations within an environment.

### BACKGROUND OF THE INVENTION

Managing visitors in large-scale campuses, such as multistoried buildings, corporate offices, colleges, hospitals, and airports, poses challenges due to the large number of visitors. Typically, visitors are provided with access cards programmed according to their destination, or sometimes accompanied by a guide. While modern Visitor Management Systems offer registration through email, web, and kiosks, there is a lack of intelligent guidance for visitors. Although buildings often have floor maps with direction and location details, these can be difficult for first-time visitors to understand. For instance, the visitors may face difficulty in identifying the correct destination. The visitor may take increased time to reach the destination due to confusion caused by complex building structures. Some solutions may reply on manual aid thereby increasing dependency, for instance, when access doors are to be opened using manual intervention. The visitors may further face difficulty in complying with the internal guidelines due to lack of upfront knowledge thereof.

Nowadays, mobile devices, such as smartphones are commonly used as user IDs in many access control systems, such as BYOD (Bring Your Own Device) based systems. However, these devices are not fully utilized for visitor management and effective guidance purposes.

### SUMMARY OF THE INVENTION

The present subject matter discloses systems and methods for guiding visitors to their intended destinations within an environment.

In an embodiment, an Artificial Intelligence (AI) based visitor guidance system for guiding visitors in an environment is provided. The visitor guidance systems comprises one or more processors and an AI engine. The one or more processors are configured to receive a visitor request comprising information about a destination in the environment which a visitor intends to visit. The one or more processors are configured to determine a current location of the visitor based on an access control log, the access control log comprising one or more access events associated with the visitor. Further, the one or more processors are configured to obtain, in real-time from an operations database, a current status of one or more access points associated with the environment. Further, the one or more processors are configured to provide the destination, the current location of the visitor, and the current status of the one or more access points associated with the environment as an input to an AI-engine. Further, the one or more processors are configured to receive, as an output from the AI engine, a route to the destination of the visitor, the route being determined by application of at least one AI technique on one or more of the destination, the current locations of the visitor and the current status of the one or more access points associated with the environment. Further, the one or more processors are configured to provide, using at least one multimedia output, the generated route on a user device of the visitor.

In some embodiments, the one or more processors are further configured to receive a user instruction comprising a real time user preference pertaining to the route. The one or more processors are further configured to provide the user instruction as an input to the AI-engine. The AI-engine is configured to generate/update, by the AI engine, the route based on the user preference included in the user instruction. The one or more processors are further configured to receive, as an output from the AI engine, the generated/updated route for providing to the user device of the visitor.

In some embodiments, the visitor request further comprises a user identity (ID). The one or more processors are configured to access historical data associated with the visitor based on the user ID. The historical data comprises data indicative of one or more of the following: visitor behavior, visitor preferences, and visitor feedback. The one or more processors are further configured to provide the historical data associated with the visitor as an input to the AI-engine for generating the route based on the historical data associated with the visitor.

In some embodiments, the visitor request further comprises a user identity (ID). The one or more processors are configured to ascertain an access level for the visitor based on the user ID. The access level is indicative of a security clearance level of the visitor. The route is generated based on the ascertained access level. The one or more processors are configured to provide the ascertained access level data as an input to the AI-engine for generating the route based on the ascertained access level data associated with the visitor.

In some embodiments, the one or more processors are further configured to monitor, in real-time, the operations database. The one or more processors are further configured to detect at least one update in the operations database, where the at least one update corresponds to a current status of an access point associated with the generated route. The one or more processors are further configured to provide the detected at least one update in the operations database as an input to the AI-engine. The AI engine is configured to update the route based on the detected at least one update. The one or more processors are further configured to receive the updated route as an output from the AI engine for providing to the user device of the visitor.

In some embodiments, the one or more processors are further configured to monitor, in real-time, the access control log. The one or more processors are further configured to detect at least one update in the access control log, where the at least one update corresponds to one or more access events are indicative of the visitor's deviation from the route. The one or more processors are further configured to provide the detected at least one update in the access control log as an input to the AI-engine. The AI engine is further configured to update the route based on the detected at least one update. The one or more processors are further configured to receive the updated route as an output from the AI engine for providing to the user device of the visitor.

In some embodiments, the access control log further comprises one or more access events associated with a person being visited by the visitor at the destination in the environment. The one or more processors are further configured to monitor, in real-time, the access control log. The one or more processors are further configured to detect at least one update in the access control log, where the at least one update corresponds to one or more access events are indicative of the personnel's location at another destination within the environment. The one or more processors are further configured to provide the detected at least one update in the access control log as an input to an AI-engine. The AI engine is further configured to update the route based on the detected at least one update. The one or more processors are further configured to receive the updated route as an output from the AI engine for providing to the user device of the visitor.

In another embodiment, a method of guiding visitors in an environment is disclosed. The method includes receiving, by one or more processors, a visitor request comprising information about a destination in the environment which a visitor intends to visit. Further, the method includes determining, a current location of the visitor based on an access control log. The access control log comprises one or more access events associated with the visitor. Further, the method comprises obtaining, in real-time, a current status of one or more access points associated with the environment from an operations database. The method further comprises providing the information about the destination, the current location of the visitor and the current status of the one or more access points associated with the environment as an input to an AI-engine. The method further comprises receiving a route to the destination of the visitor as an output from the AI engine. The route being determined by application of at least one AI technique on one or more of the information about the destination, the current location of the visitor, and the current status of the one or more access points associated with the environment. The method includes providing the route on a user device of the visitor using at least one multimedia output.

In yet another embodiment, a computer-readable medium having computer-executable instructions stored thereon is disclosed. The computer-executable instructions, when executed by a processing system, cause the processing system to receive a visitor request comprising information about a destination in the environment which a visitor intends to visit. Further, the computer-executable instructions cause the processing system to determine a current location of the visitor based on an access control log. The access control log comprises one or more access events associated with the visitor. The computer-executable instructions further cause the processing system to obtain, in real-time from an operations database, a current status of one or more access points associated with the environment. Further, the computer-executable instructions cause the processing system to provide the information about the destination, the current location of the visitor and the current status of the one or more access points associated with the environment as an input to an AI-engine. Furthermore, the computer-executable instructions cause the processing system to receive a route to the destination of the visitor as an output from the AI engine. The route being determined by application of at least one AI technique on one or more of the information about the destination, the current locations of the visitor and the current status of the one or more access points associated with the environment. Additionally, the computer-executable instructions cause the processing system to provide the generated route on a user device of the visitor using at least one multimedia output.

This summary is provided to describe select concepts in a simplified form that are further described in the detailed description. This summary is not intended to identify key or essential features of the claimed subject matter, nor is it intended to be used as an aid in determining the scope of the claimed subject matter.

### BRIEF DESCRIPTION OF DRAWINGS

Embodiments of the subject matter will hereinafter be described in conjunction with the following drawing figures, wherein like numerals denote like elements, and:
FIG. 1 is a schematic block diagram of a visitor guidance system for guiding visitors in an environment, according to one or more embodiments of the present disclosure;
FIG. 2 is a schematic block diagram depicting an AI engine, according to one or more embodiments of the present disclosure;
FIG. 3 illustrates a flowchart of a method for guiding visitors in an environment, according to one or more embodiments of the present disclosure;
FIG. 4 illustrates a flowchart of a method of updating a route to a destination within an environment, according to one or more embodiments of the present disclosure;
FIG. 5 illustrates a flowchart of a method of updating a route to a destination within an environment, according to one or more embodiments of the present disclosure;
FIG. 6 illustrates a flowchart of a method of updating a route to a destination within an environment, according to one or more embodiments of the present disclosure;
FIG. 7 illustrates a use case depicting implementation of the visitor guidance system, according to one or more embodiments of the present disclosure;
FIG. 8 illustrates a use case depicting implementation of the visitor guidance system, according to one or more embodiments of the present disclosure; and
FIG. 9 illustrates a use case depicting implementation of the Artificial Intelligence (AI) based visitor guidance system, according to one or more embodiments of the present disclosure.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### DETAILED DESCRIPTION OF INVENTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

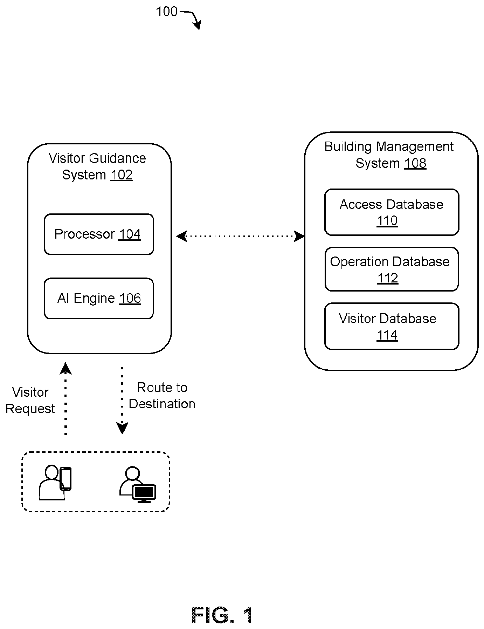

**FIG. 1** is a schematic block diagram 100 illustrating implementation of a visitor guidance system, hereinafter interchangeably referred to as "the guidance system 102" or "the system 102", for guiding visitors to their intended destinations within an environment. Examples of the environment may include, but are not limited to, buildings, offices, warehouses, facilities, hospitals, and campuses.

According to aspects of the present disclosure, the system 102 may be an Artificial Intelligence (AI) based system and may include one or more processors 104 (interchangeably "the processor 104" or "controller 104") and an AI engine 106. The one or more processors 104, in some examples, may be implemented or realized as general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In some examples, the processor 104 may be realized as microprocessors, controllers, microcontrollers, or state machines. In some examples, the processor 104 may be realized as a combination of computing devices, such as, a combination of digital signal processors and microprocessors, a plurality of microprocessors, one or more microprocessors in conjunction with a digital signal processor core, or any other such combination/configuration. In some embodiments, one or more processors, such as the processor 104 or equivalents thereof, may be provided for performing operations thereof, as described herein.

The AI engine 106 may be understood as a routine or service or program implementing one or more trained models. Herein, the AI engine 106 may be configured to implement one or more AI techniques using one or more trained models for processing data that is provided as an input to the AI engine 106. Accordingly, by application of the one or more AI techniques on the input data, the AI engine 106 generates an output which is provided to an entity or component of the system, such as the system 102, in conjunction with which the AI engine 106 is implemented.

In some embodiments, the AI engine 106 may be implemented on one or more processors, such as the processor 104 described above. In some embodiments, although shown distinct to the processor 104, the AI engine 106 may be implemented using or as a part of the processor 104. Furthermore, any types of micro-processors, controllers, processors including graphical processing units and central processing units, routines, programs, connections, may be implemented for realizing the AI engine 106. In the context of the present disclosure, without limitation, the AI engine 106 may be configured to generate or optimize or update routes to a destination based on input data provided thereto.

As depicted in the figure, the system 102 may be communicatively coupled with a building management system (BMS) 108. In an example, the BMS 108 may manage and store information related to various systems and operations related to the environment in one or more databases. As depicted in the figure, the BMS 108 may include an access database 110, an operation database 112 and a visitor database 114.

In an example, the access database 110 may store an access control log relating to accesses performed at a plurality of access points, such as card readers, provided within the environment. These accesses performed by the visitor/persons may interchangeably be referred to as access events. As may be understood, the access at these access points may be performed by persons within the environment or visitors to the environment. Thus, during their movement within the environment, several accesses may be made by the person/visitor at various access points in the environment. These access events are recorded in the access log stored in the access database 110 in real-time. For instance, a visitor X may visit an environment, such as a hospital to meet a doctor Y Herein, the access log stored in the access database 110 may include the access events associated with the visitor X and the doctor Y.

The operations database 112 may store a current status of one or more access points associated with the environment and may be managed and updated in real-time, according to aspects of the present disclosure. As an example, consider that the environment may be a hospital which has N number of floors and each floor may have M number of access points. In an example, the BMS 108 may manage and store the information associated with the M access points. For instance, the BMS 108 may store information such as whether the access point is functional or not, whether the access point is under maintenance, whether area around access point is crowded or not, whether an emergency alert is associated with a particular access point, etc. The BMS 108 may record and store the aforementioned information representative of a current status of the access points in the operations database.

In an example, the current status of the one or more access points may be determined based on information received or captured by an access control system that monitors status of access points, one or more CCTVs, and one or more alarms. For instance, the access control system may have information about an operation status of the access points and said information may be stored as current status of the access point in the operation database 112. Herein, examples of the operation status may be operational, faulty, under repair, and under maintenance, and the same may be stored as the current status for a given access point.

In another example, a current status of an access point may be determined based on a feed captured from a CCTV near the access point. Herein, the current status may be indicative of volume of crowd around the access point. For instance, a current status 'crowded' may indicate a large volume of people around the access point, whereas a current status "no crowd" may indicate less than five people around the access point. In an example, the BMS 108 may implement conventional techniques to determine the number of people from the CCTV feed and accordingly determine the current status based on the determined number of people around the access point. The current status may be stored in the operations database 112.

Further, in some embodiments, a status of an alarm installed near an access point may be indicative of a current status of the access point. For instance, the alarm may be set ON and may indicate an emergency near a particular access point. Accordingly, the current status of the access point may be deemed as "emergency related" and may be stored in the operations database 112.

In some embodiments, the current status of an access point may be a combination of one or more current status as determined using various systems/devices/alarms, installed in the environment. For instance, for an access point A, the current status may be operational, less crowded, and no emergency. Whereas, if an emergency has occurred near an access point B, its current status may be recorded as functional, crowded, and emergency related, in the operations database 112.

In some embodiments, the visitor database 114 may store user profile of visitors and historical data associated with a plurality of registered visitors. As may be understood, on a first visit to the environment, the visitor may be required to perform a registration. The registration may be as a guest or as a routine visitor, in some examples. Upon registration, a user profile for the visitor is created which may include information, such as a first name and a last name, an email ID, a phone number, an age, a date of birth, an access level, etc. of the visitor.

In some embodiments, the historical data may include data indicative of one or more of visitor behavior, visitor preferences, and visitor feedback. In an example, the historical data may populated based on and updated for the visitor with each visit to the environment. In another example, the system 102 may provide an interface to the visitor with an option to provide one or more of the aforementioned data items as input. Accordingly, based on the input(s) received from the visitor, the corresponding data item in the user profile of the visitor is updated in the historical data in the visitor database 114. For instance, during the registration, the visitor may be provided with an option to define his preferences with regard to the services offered in the environment.

In an example, the visitor behavior may be information about the various patterns followed by a visitor while visiting an environment, such as the order of visits to destinations within the environment, the time spent at each destination, the travel time between any two access points, the visitor's walking speed, etc. In an embodiment, the visitor behavior may be determined using the access events recorded against the user ID in the access logs. For instance, if a visitor routinely stops at another location before reaching their intended destination, this repeated pattern may indicate specific behavioral tendencies. If the usual travel time from an entry point of the environment to the intended destination is approximately 10 minutes, but the access record shows the visitor consistently taking 20 minutes, it may be indicative of that the visitor walks slowly or makes additional stops along the way.

In an example of a hospital environment, consider that a visitor X used to visit the cafeteria before heading to the cardiology department, even though the intended destination is a cardiology appointment. It may be indicative of a behavior pattern for the visitor X of taking a break or needing refreshment before his appointment. According to the aspects of the present disclosure, the visitor guidance system 102 knowing the behavior of the visitor X of having coffee before consultation, may add route to cafeteria as a pre-destination., for providing better experience to the visitor. In another example, if the expected travel time from reception to cardiology is 10 minutes but visitor X may be taking 20 minutes, it may indicate the visitor behavior of walking slowly or may be indicative of the behavior that the visitor may require more time due to health conditions. In another example, visitor X may follow a pattern while visiting a hospital starting with 10 minutes at reception, then spending 30 minutes in radiology for imaging tests, followed by 45 minutes in cardiology for consultation, and concluding with 20 minutes at the cafeteria for refreshment before exiting the hospital. This may be indicative of said visitor's behavior while visiting the hospital. In an example, the AI engine 106 utilizes the visitor behavior stored in the historical data associated with the visitor for optimization of the route.

In an example, visitor preferences may include information about the last visited destinations, preferred destinations, physical condition of the visitor, preference of visiting to the destination in the environment which may be for example by walking, lift, escalator, wheelchairs, transportation rides, etc. For instance, in a research lab, the preferred destinations may be laboratories, interactive educational exhibits, lecture halls, innovation hubs, conference rooms, etc. In an educational institution, the preferred destinations may be academic block, admission office, student union center, library, hostel, cafeteria, Faculty Lounges, etc. The physical condition of the visitor may be indicative of any illness, physical disability, mental disability, etc.

In an example, the visitor preferences associated with a visitor may be used as an additional data element for generating a route to the destination which the visitors intends to visit. For example, a visitor X may have preference of using lifts while visiting to the intended destination. Accordingly, the preference may be factored in while determining the route for the visitor. In another example, a visitor Y may have a walking disability and may not be able to walk for greater distances. Accordingly, the preference for the visitor Y may include use of wheelchair. Thus, during the calculation of the route to the intended destination of the visitor Y, the preference of wheelchair is factored in by the system 102. Accordingly, to aspects of the present disclosure, the visitor guidance system 102 may provide the route to the visitor to reach the destination considering the preferences the visitor may have, for providing better experience to the visitor.

In some embodiment, in each visitation marking process, the kiosk may provide the visitor with an option to input/change the details associated with the visitor preferences on a display of the kiosk along with an option to input destination. The visitor may then select or change the already saved details corresponding to the visitor preferences. For example, the already saved visitor preference may be using lifts and the visitor may want to reach the destination by walking, the visitor may change the option to walking. Accordingly, the visitor database may get updated with the newly entered details. The visitor guidance system 102 may provide the route to the visitor to reach the destination considering the preferences the visitor may have, for providing better experience to the visitor. In an example, the AI engine 106 utilizes the visitor preference stored in the historical data associated with the visitor for optimization of the route.

In an example, the visitor feedback may be indicative of an experience the visitor may had on his last time visit to the environment. In an embodiment, while exiting the environment, the visitor may be provided with an option to input the feedback either at the kiosk or on a client application installed on a user device of the visitor. The options of feedback may be at least one of as good, bad, average, below average, etc. Further, the selection of any option by the visitor may be provided with an additional option to mention the reason for having said feedback. For example, if the visitor had poor experience. The visitor may select an option of poor and may mention the reason either as the suggested route took long time to reach to the destination as was informed or the suggested route may have access points which were not functional and had caused delay and rerouting of the route when requested by the visitor. The visitor guidance system 102 may provide the route to the visitor when the visitor next time visiting the facility taking into consideration the feedback, for providing better experience to the visitor. In an example, the AI engine 106 utilizes the visitor feedback stored in the historical data associated with the visitor for optimization of the route.

In an embodiment, when once the visitor finish of the registration after entering the environment and inputting the visitor requests, a card may be issued to the visitor. The card is mapped with the user profile of the visitor and may include one or more details associated with the visitor, such as a user ID, first name and last name of the visitor, a role of the visitor, a designation of the visitor, etc. The visitor may present the card at various access points, such as card readers present within the environment to gain access/exit from the area of the environment.

In some embodiments, the card may be mapped with the access level of the visitor associated with user profile of the visitor. The system 102 may generate a route to the intended destination in the visitor request based upon the access level associated with the user profile of the visitor. For instance, when the environment is a research centre and the visitor is a scientist intending to visit the research lab 2 located on the second floor. The visitor may not have security clearance for visiting research lab 3 located at the same floor as per the access level associated with the user profile of the visitor. The system 102 may generate a route for the scientist which do not include the access point associated with the research lab 3 in order to provide the fastest route to the scientist. In another example, when the environment is a research center and the visitor is a client intending to visit the conference room for a meeting. According to said example, said visitor may not have security clearance for visiting research lab may be situated on first floor of the centre. In an example, if the visitor may be intending to access the research lab access point, the card access may be denied for the said visitor.

As mentioned above, the system 102 guides visitors to their intended destinations within the environment. In some embodiments, the processor 104 may be configured to receive a visitor request which includes information about a destination in the environment which the visitor intends to visit. In some examples, the destination may be a particular room within the environment. In some examples, the destination may refer to a space within the environment.

In some examples, the destination may refer to a designated space allotted to a person who is being visited by the visitor. For instance, the destination may be an office location of the person being visited. Herein, the destination may be represented by the name of the person. The details of the designated spaces allotted to the persons within the environment, may be stored in a database, that is accessible by the system 102. Accordingly, in case the destination includes a name of the person, the system 102 is able to retrieve the details of the corresponding designated space from the database. In an example, the details of the spaces designated or allocated to persons may be stored in the operations database 112.

In an implementation, the processor 104 may receive the visitor request from a user device, such as a smartphone of the visitor. In an embodiment, a client application may be installed on the smartphone of the user which may be used for generating the visitor request. Herein, one or more interfaces of the client application may provide the visitor with the option of inputting the destination which the visitor intends to visit in the environment.

In some examples, the client application may provide recommendations of the destinations to the visitor based on input text provided by the visitor. For instance, on entering a portion of the destination, the client application may fetch one or more matching destination from the system 102 based on the segment, and may provide corresponding one or more destination recommendations to the visitor. In case if the intended destination appears in the one or more recommended destinations, the visitor may select the same. Alternatively, the visitor may continue to enter the destination sought to be visited and may ignore the one or more recommended destinations. Once the destination is inputted, the client application may generate the visitor request and may provide the same to the visitor guidance system 102.

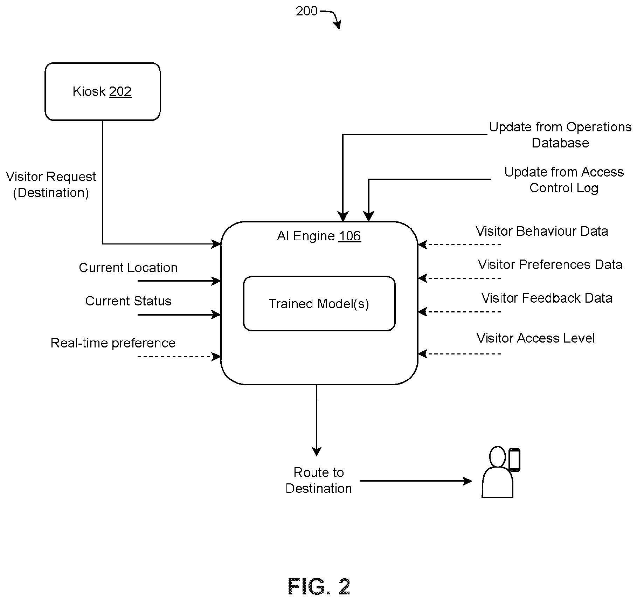

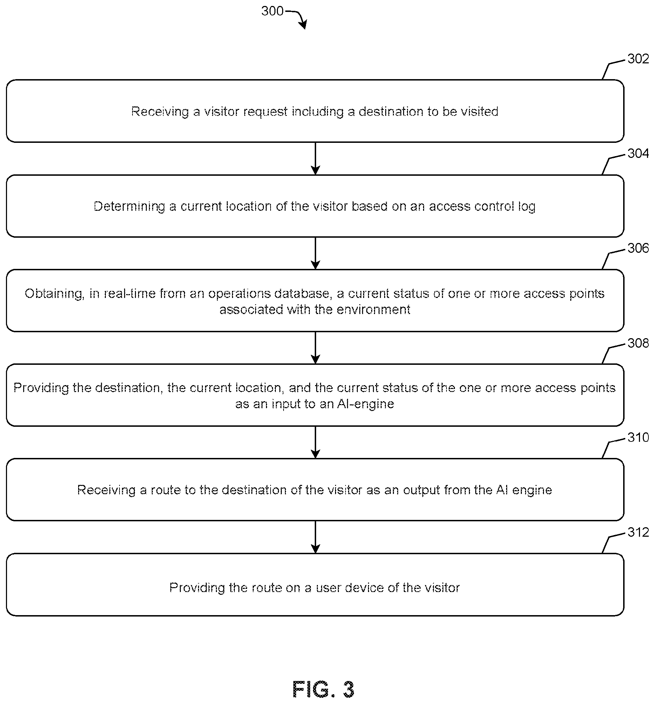

In another implementation, the processor 104 may receive the visitor request from a kiosk (not shown in the figure) installed within the environment, details of which are provided in the description of figure 2 and 3.

As mentioned above, the visitor request includes the destination that the visitor intends to visit. In some examples, the visitor request may include other details as well. For instance, the visitor request may include one or more of a user ID of the visitor, an access level assigned to the visitor, a duration of the visit, a date and time of visit, an id of the person being visited, and a contact number of the person being visited.

In some embodiments, after receiving the visitor request, a card may be issued to the visitor. The card may be a digital card and may be transmitted to the smartphone of the visitor. In another example, a person working in the environment, such as a receptionist, may provide the visitor with a physical card. The card is mapped with the user profile of the visitor and includes details, such as a user ID, first name and last name of the visitor, a role of the visitor, a designation of the visitor, etc. The user may present the card at various access points, such as card readers present within the environment to gain access/exit from the area of the environment.

After receiving the visitor request, the processor 104 may determine a current location of the visitor. In some embodiments, for determining the current location, the processor 104 accesses the access database 110 of the BMS 108. As mentioned above, the access database 110 stores the access control log that includes information about the access events corresponding to persons/visitors in the environment. The processor 104 may search for the user ID of the visitor as mentioned in the card issued to the visitor in the access log and accordingly may retrieve a latest access record of the visitor. The latest access record may include details of the latest access event of the visitor, i.e., a location of the access point at which the visitor has performed the last access event. Thus, the location of the access point is determined as the current location of the visitor.

In addition to determining the current location of the visitor, the processor 104 may be further configured to obtain the current status of one or more access points associated with the environment. In said embodiment, the current status of one or more access points associated with the environment 100 may be obtained from the operations database 112 in the BMS 108. In an example, the current status of an access point may be one of operational, faulty, under repair, under maintenance. Furthermore, the current status may also include status which indicates a crowd level and an emergency state around the access points.

As may be understood, 'operational' indicates that the access point is functional. 'Faulty' may indicate that the access point is non-functional. 'Under repair' may indicate that the access point is undergoing repair to restore its functionality. 'Under maintenance' may indicate that the access point is undergoing periodic or requested maintenance work, which may include updation of keys, software, etc. As may be understood, when the current status is one of 'faulty', 'under repair', and 'under maintenance', the corresponding area is not accessible to users/visitors. In some embodiments, the operations database may be accessed and a current status of the access points installed in the environment may be obtained.

Once the current location of the visitor is determined and the current status of the access points is obtained, the processor 104 may provide the aforementioned data along with the destination intended to be visited by the visitor as an input to an AI-engine 106. According to aspects of the present disclosure, the AI engine 106 may determine a route to the destination of the visitor. In an example, the route may be determined by application of at least one AI technique on one or more of the current locations of the visitor and the current status of the one or more access points associated with the environment. Once determined, the AI-engine 106 may then use the information about the current status of the access points to optimize the route. For instance, the AI-engine may ascertain a current status of all the access points that are falling on the route. Accordingly, based on whether one or more of the access points are operational, or non-operational (faulty, under repair, or under maintenance, crowded, etc.), the AI-engine 106 may optimize the route to avoid any passage block on the route to the destination.

The processor 104 may be configured to receive the generated route as an output from the AI engine 106. Subsequently, the processor 104 provides the generated route on the user device, say, a smartphone, of the visitor. Herein, the route may be provided along with at least one multimedia output. In an example, the multimedia output can be at least one of video, text message or voice message on the user device of the visitor.

In some embodiments, the visitor guidance system transmits the route to the smartphone of the visitor. For instance, a link may be sent to the smartphone of the visitor. On clicking the link, a webpage displaying the route may be opened. In another instance, where the client application is present in the smartphone, the route is displayed in an interface of the smartphone. In some embodiments, audio instructions are also transmitted to the smartphone of the visitor along with the route. Accordingly, audio instructions pertaining to the route are provided to the visitor through the smartphone. In some embodiments, AR/VR/MR instructions are also provided on the smartphone or other compatible user device of the visitor. Accordingly, said AR/VR/MR instructions are provided to the visitor through the smartphone or the compatible device.

According to aspects of the present disclosure, the visitor guidance system 102 may implement several techniques, which may include AI-based intelligence for generating/optimizing the route to the destination for the visitor, details of which are provided below.

In an example, the processor 102 may be configured to receive the visitor preference in real time. The AI-engine may generate/optimize the route based on real-time user preferences. The visitor may provide instructions comprising preferences in real time for instance by providing user instructions through kiosk or through client application. For instance, the kiosk or the client application may provide the visitor with an interface on which a list of preferences may be displayed.

The list of preferences may include optimization options relating to the environment. For instance, considering a hospital as an environment, the list may include optimizations options for selecting/deselecting stairs, escalators, lifts, etc. The visitor may accordingly select/deselect one or more of the aforementioned optimization options from the interface. The selection/deselection may be passed onto the system 102 as user instructions including the real-time preferences. Accordingly, the system 102 may generate/update the route based on the real-time preferences of the visitor. For instance, in case the visitor provides the real-time preferences at the same time instant while inputting the destination, the real-time preferences of the visitor are provided to the system 102 along with the visitor request. Thus, in such a case, the real-time preferences are passed to the AI engine and the route is accordingly generated.

In another example, the visitor may seek to provide real-time preference after the generation of the route. For instance, when the visitor is walking through the environment, the visitor may feel like taking stairs to the destination. Accordingly, the visitor may provide the user instruction specifying the preference for the stairs through the client application or through a kiosk, in real-time. In such a case, the user instruction is passed to the AI engine, which optimizes the route for the visitor based on this newly learnt visitor preference. As would be understood, the real-time preference may be similar to or different than the visitor preferences stored in the historical data associated with the visitor. Thus, in examples where the real-time preference is different than the stored visitor preference, the route for the visitor may be generated based on the real-time preference.

In an example, the AI engine 106 may be trained to identify patterns and generate insights based on the user's preference in real time pertaining to the route. Accordingly, when the visitor's real time preference corresponding to the visitor is fed to the AI engine 106, the AI engine 106 may apply one or more AI techniques and generates insights on visitor preferences received in real time and may also refer to the visitor preferences stored for the said visitor from the historical data, etc. In an example, the AI engine 106 may optimize a route comprising these insights and the same may be provided to the user device of the visitor.

In some embodiments, the processor 104 may be configured to access historical data associated with the visitor based on the visitor ID (interchangeably "the user ID"). The AI-engine may generate/optimize the route based historical data associated with the visitor. As may be explained earlier in the description, the historical data comprising data indicative of one or more of: visitor behavior, visitor preferences, and visitor feedback. Further, the processor 104 may be configured to provide the historical data associated with the visitor as an input to the AI-engine 106. In an example, the AI engine 106 optimize a route comprising these insights and the same may be provided to the user device of the visitor.

In an example, the AI engine 106 may be trained to identify patterns and generate insights based on the visitor behavior corresponding to users. Accordingly, when the visitor behavior corresponding to the visitor is fed to the AI engine 106, the AI engine 106 may apply one or more AI techniques and generates insights, such as last visited destinations, order of visits to the destinations, time spent at each destination, travel time between any two access points, walking speed of the visitor, etc. In an example, the AI engine 106 may generate/optimize the route based on the visitor behavior and the intelligently generated/optimized route may be provided to the smartphone of the visitor.

In some embodiments, the AI engine 106 may apply one or more AI techniques and generates insights related to the visitor preferences, such as preferred destinations, physical condition of the visitor, preference of visiting to the destination in the environment which may be for example by walking, lift, escalator, wheelchairs, transportation rides, etc. In an example, the AI engine 106 may utilize the visitor preference during generation/updation or optimization of the route to the destination and the intelligently generated/optimized route is provided to the smartphone of the visitor.

In some embodiments, the AI engine 106 may apply one or more AI techniques on the feedback received from the visitors and may generate corresponding insights, such as when route A was suggested to the visitor X, the visitor X did not like the level of air conditioning along the route and found the corridor A along the route to be extremely cold. Accordingly, an insight might be generated that the visitor X prefers moderate AC segments. In an example, the AI engine 106 may generate/optimize the route to the destination based on the feedback received from the visitors and the same may be provided to the user device of the visitor.

As would be appreciated, in some embodiment, the AI engine 106 may optimize the route to the destination based on a combination of one or more of the visitor behaviour, visitor preference, and visitor feedback, and the same may be provided to the user device of the visitor.

In some embodiments, the processor 104 may be configured to ascertain an access level for the visitor based on the visitor ID. The access level for the visitor may be associated with the visitor ID. In an example, the access level being indicative of a security clearance level of the visitor. Further, in the embodiment, the processor 104 may be further configured to provide the access level for the visitor based on the visitor ID as an input to the AI-engine 106. Further, the AI engine 106 may be configured generate the route based on the ascertained access level.

In an example, the AI engine 106 may be trained to identify patterns and generate insights based on the access events corresponding to users. Accordingly, when the access events corresponding to the visitor is fed to the AI engine 106, the AI engine 106 may apply one or more AI techniques and generates insights, such as the access level for the visitor ascertained based on the visitor ID. In an example, the AI engine 106 generates an output comprising these insights and generate the route based on the ascertained access level.

**FIG.** 2 is a schematic block diagram 200 depicting the AI engine 106, according to one or more embodiments of the present disclosure. As mentioned above in description of FIG. 1, the system 102 may implement the AI engine 106, which may be used for generating/optimizing/updating the route to a destination which a visitor intends to visit.

In an embodiment, a visitor input may be received at a kiosk 202 from the visitor. The kiosk 202 may be an interactive kiosk and in some examples, a plurality of kiosks 202 may be deployed at various points within the environment. For instance, the kiosks 202 may be deployed at locations, such as entrances, lobbies, or reception areas, allowing users/visitors to provide information and make selections through multiple input methods.

In some embodiments, the kiosk 202 may be a visitor management kiosk designed to streamline the check-in process for visitors. In an example, there may be multiple input methods to provide input to the kiosk 202, such as touchscreen interface, keyboard or mouse, card readers, barcode scanner, biometric scanners, etc. In an example, the kiosk 202 may be equipped with barcode scanners for scanning tickets, QR codes, or visitor badges, and biometric scanners for capturing fingerprints or facial recognition data. Other input methods may include NFC/RFID readers for contactless interactions and signature pads for capturing digital signatures.

In some examples, the visitor request may be generated by the kiosk 202 installed in the environment based on user input from the visitor. Herein, on visiting the environment, the visitor may be first required to register if the visitor is a first-time visitor, or mark visitation on the kiosk 202. In some embodiments, the visitor may register or mark visitation on the kiosk 208 using a card, such as an access card. The card may be a digital card and may be transmitted to a smartphone of the visitor. The visitor may either scan the digital card on the scanner of kiosk to register or mark visitation on the kiosk202. In another example, the visitor may have a physical card issued to him/her and may tap the card at the kiosk 202 to register or mark the visitation. In another example, the visitor may perform biometric scanning to register or mark visitation on the kiosk 202.

In an example, the card is mapped with the user profile of the visitor and includes details, such as a user ID, first name and last name of the visitor, a role of the visitor, a designation of the visitor, etc. The visitor may present the card at various access points, such as card readers present within the environment to gain access/exit from the area of the environment. Likewise, all the other persons working or related to the environment are issued access cards and all their access activity or access events at the access points are recorded in an access control log.

In the registration/visitation marking process, the kiosk 202 may provide the visitor with an option to input destination on a display of the kiosk 202. In an example, a text input may be provided to the kiosk 202 for inputting the destination. In another example, a voice input may be provided to the kiosk 202 for inputting the destination. Herein, the kiosk 202 may prompt the visitor to enter the destination using an audio prompt. Once the destination is inputted, the kiosk 202 may generate the visitor request and may transmit the same to the AI engine 106.

In some embodiments, as explained above in the description of FIG. 1, the visitor request may be generated by a client application running on the smartphone of the visitor, and the same may be transmitted to the AI engine 106.

As mentioned above, the visitor request includes the destination that the visitor intends to visit. In some examples, the visitor request may include other details, such as a user ID of the visitor, an access level assigned to the visitor, a duration of the visit, a date and time of visit, an id of the person being visited, and a contact number of the person being visited.

Further, in an embodiment, along with the intended destination, the AI engine 106 may be fed with current location of the visitor in the environment and the current status of one or more access points associated with the environment in order to generate/optimize the route for the visitor to reach the intended destination. The determination of the current location of the visitor in the environment and the current status of one or more access points associated with the environment has been explained in detail in the description of Figure 1 and the same is not explained herein for the sake of brevity.

In some embodiments, the AI engine 106 may generate the route between the current location of the visitor and the intended destination by applying one or more AI techniques. The AI engine 106 may optimize the route by considering the information of the current status of one or more access points associated with the environment.

In one example, the AI engine may generate a direct route based on the intended destination, say, room B and the current location, say, kiosk A, from where the visitor has requested for the destination. The route may include point A1, B1, C1, D1 and E1 between A and B in the environment.

In another example, the AI engine may intelligently optimize the route for the intended destination of the visitor based on the current status of the one or more access points. In an example, based upon the current status of access point B1, which has been reported as crowded to the AI engine 106, the AI engine 106 may may look for alternative access points closest to access point B1, which may be access points B2 and C2, thus ensuring the shortest path which takes lesser time to reach is selected as an alternative to the crowded access point B1. Similarly, in another example, if the visitor's route includes a point D1 that has restricted access due to a security alert, the AI engine 106 may suggest an alternate path via D3, maintaining both safety and convenience.

In some embodiments, the AI engine 106 may intelligently generate the route for the intended destination of the visitor. For instance, in some embodiments, the AI engine 106 may generate the route to the destination based upon the visitor behavior, visitor preference, visitor feedback, and access right provided to the visitor.

As an example, during the generating of the route if historical data corresponding to a visitor is available in the visitor database 114 (not shown in figure), the same is provided as an input to the AI engine 106 by the controller 104. On receiving the historical data, the AI engine 106 accordingly may apply one or more AI techniques on the historical data for generating the route.

For instance, the behaviour data for a visitor X may indicate that visitor X likes to visit a chemist shop prior to visiting a doctor B in the hospital environment. Further, the preference data for the visitor may indicate that the visitor X prefers lifts as opposed to stairs. Yet further, the feedback data may indicate that the visitor X does not like extreme cold spaces. Furthermore, the visitor X may not have access to research labs in the hospital.

Thus, with the aforementioned data available about the visitor X, the AI engine 106 may apply one or more techniques to intelligently generate the route for the visitor X to visit the doctor B. For instance, the visitor X may generate the request at the reception so the current location is detected as reception, the destination is selected as the designated room for the doctor B, and the current status for the access points along the route are obtained. Now, with the basic route being generated first as a draft, the AI engine 106 may apply techniques to customize the same as per the aforementioned data available about the visitor X to intelligently generate the route. As a result, the route thus generated would guide the visitor X to chemist shop first, would avoid stairs and include lifts wherever possible, avoid cold temperature spaces to the extent possible, and avoid including access points relating to research lab on the route.

Thus, the AI engine 106 generates the route intelligently based on the location, destination, current status of access points, historical data, and access rights of the visitor.

In some embodiments, the AI engine 106 may optimize the generated route based on various updates occurring within the environment. A detailed description for the above embodiments is provided below.

In some embodiments, the AI engine 106 may receive updates regarding the current status of the access points present within the environment and may optimize the route if required. Consider a case where an access point has become non-functional. As the operations database is monitored in real-time, the AI engine 106 may receive the update about the non-functioning access point in real-time.

As mentioned above in the description of FIG. 1, the operations database includes a current status of the various access points present within the system. In some embodiments, the operations database may be monitored in real-time by the processor 104 to detect any change in a current status of an access point which lies on the route to the destination which the visitor intends to visit. The change in the current status could depict that the access point was previously functional and is now non-functional (repair, maintenance, etc.). In another example, the change in the current status could depict that the access point was previously non-functional (repair, maintenance, etc.) and is now functional. As soon as the update in the operations database is detected, the same may be provided to the AI engine 106 for updating or optimizing the route to the intended destination. Accordingly, the AI engine 106 may process the received input about the update in the operations database for updating the route, as required. For instance, if an access point A falling on the route is now non-functional, the AI engine 106 may select an alternate access point B which causes minimum deviation in the route, and may accordingly update the route to include directions to access point B instead of access point A. In another example, if an access point A falling on the route was previously non-functional and now becomes functional, and said access point A provides shorter route to the destination, the AI engine 106 may update the route to include the directions through the access points A. The AI engine 106 may provide the updated route to the user device of the visitor.

In some embodiments, the AI engine 106 may receive updates regarding the locations accessed by the visitor and may optimize the route accordingly. Herein, based on the received updates, the AI 106 may determine that the visitor has deviated from the route and may accordingly optimize the route.

In an example, the AI engine 106 may receive the updates from the processor 106 which is monitoring the access control log in real-time. As mentioned above in the description of FIG. 1, the access control log includes information about the access events relating to the visitor/people present in the environment. Thus, based on the access events corresponding to the visitor that are recorded in the access control log, the processor 104 may determine that a deviation in route has occurred. The update related to the deviation is provided to the AI engine 106. The update, in an example, may include the last accessed location of the visitor. The AI engine accordingly may apply one or more techniques on this new learnt location of the visitor and may update the route to guide the visitor to the destination. Once updated, the updated route is sent to the smartphone of the user, in an example.

In some embodiments, the AI 106 may receive an update that the person being visited has changed his location. In such cases, the AI engine 106 may again optimize the route to the new destination. For instance, in an example, the controller 104 monitoring the access control log may learn that the person being visited has changed the location, say, from room C to room D. This is detected as an update by the controller 104 and the same is provided as an input to the AI engine 106. The AI engine 106 accordingly updates the route as per the new destination of the person being visited, say, by applying one or more AI techniques. Once updated, the updated route is sent to the smartphone of the user, in an example.

**FIG.** 3 illustrates a flowchart of a method 300 for guiding visitors in an environment, according to one or more embodiments of the present disclosure. The steps of the method 300, described in connection with the embodiments disclosed herein, may be embodied directly in hardware, in firmware, in a software module executed by a system, such as the visitor guidance system 102, or in any practical combination thereof. In some embodiments, the method 300 may be implemented by the visitor guidance system 102 deployed in an environment, such as organizations, enterprises, universities, hospitals, labs, research centres, etc., for assisting visitors visiting the environment.

In the method 300, at step 302, a visitor request is received. In an example, the visitor guidance system may receive the visitor request that is generated based on user inputs provided by a visitor. The visitor request, amongst other things, includes a destination of the environments which the visitor seeks to visit. In some examples, the destination may refer to a particular room within the environment. For instance, the destination may be a LAB A in a research facility. In some examples, the destination may refer to a space within the environment. For instance, the destination may be a pit garage in a car testing facility.

In some examples, the destination may refer to a designated space allotted to a person who is being visited by the visitor. For instance, the destination may be a doctor's room in a hospital. Herein, the destination may be represented by the name of the doctor. The details of the designated spaces allotted to the persons within the environment, may be stored in a database, that is accessible by the visitor guidance system. Accordingly, in case the destination includes a name of the person, the visitor guidance system is able to retrieve the details of the corresponding designated space from the database.

Referring to the visitor request, in some examples, a client application installed on the smartphone of the user may be used for generating the visitor request. Herein, one or more interfaces of the client application may provide the visitor with the option of inputting the destination which the visitor intends to visit in the environment. In some examples, the client application may provide recommendations of the destinations to the visitor based on input text provided by the visitor. For instance, on entering a segment of the destination, the client application may fetch one or more matching destination from the visitor guidance system based on the segment, and may provide corresponding one or more destination recommendations to the visitor. In case if the intended destination appears in the one or more recommended destinations, the visitor may select the same. Alternatively, the visitor may continue to enter the destination sought to be visited and may ignore the one or more recommended destinations. Once the destination is inputted, the client application may generate the visitor request and may provide the same to the visitor guidance system 102.

In some examples, the visitor request may be generated by a kiosk installed in the environment based on user input from the visitor. Herein, on visiting the environment, the visitor may be first required to register or mark visitation on the kiosk. In the registration/visitation marking process, the kiosk may provide the visitor with an option to input destination on a display of the kiosk. The visitor may accordingly provide the destination as input, for example, a text input, to the kiosk. In some examples, the action of inputting the destination may be voice-input based. That is, the kiosk may prompt the visitor to enter the destination using an audio prompt. The visitor may accordingly provide a voice input specifying the destination. The kiosk may capture the voice input and may process the same for determining the destination. Once the destination is inputted, the kiosk may generate the visitor request and may transmit the same to the visitor guidance system 102.

In some examples, the visitor may have requested for the visit in advance, for example, using a booking done through the client application. Accordingly, on reaching the environment, the visitor may then raise the visitor request using his smartphone or the kiosk, to visit the intended destination within the environment. In some examples, no advance appointment may be done and the visitor request may be generated by the visitor after reaching the environment. In some examples, the visitor may raise multiple visitor requests in a single visit. For instance, the visitor A may visit the hospital for multiple check-ups. Herein, after a first visitor request to a lab for first check-up, the visitor A may raise a second visitor request for another lab for a second check-up. Thus, multiple visitor requests may be raised by the visitor. The visitor may raise the multiple requests using either of the smartphone or a kiosk installed in the environment.

As mentioned above, the visitor request includes the destination that the visitor intends to visit. In some examples, the visitor request may include other details as well. For instance, the visitor request may include one or more of a user ID of the visitor, an access level assigned to the visitor, a duration of the visit, a date and time of visit, an id of the person being visited, and a contact number of the person being visited.

In some embodiments, after receiving the visitor request, a card may be issued to the visitor. The card may be a digital card and may be transmitted to the smartphone of the visitor. In another example, a person working in the environment may provide the visitor with a physical card. The card is mapped with the user profile of the visitor and includes details, such as a user ID, first name and last name of the visitor, a role of the visitor, a designation of the visitor, etc. The visitor may present the card at various access points, such as card readers present within the environment to gain access/exit from the area of the environment. Likewise, all the other persons working or related to the environment are issued access cards and all their access activity or access events at the access points is recorded in an access log, as described below.

At step 304, a current location of the visitor is determined in real-time based on an access control log. The access control log, as used herein, may be understood as a log of accesses recorded at a plurality of access points, such as card readers, within the environment. As may be understood, the environment may include access points, such as card readers at a plurality of locations, such as doors, corridors, stores, labs, rooms, sections of the environment, to control access/exit from the said locations. Accordingly, users, such as persons working within the environment/visiting the environment ought to present access cards for accessing the particular section/area of the environment. On presentation of the card by the user, the details of access are captured and stored in the access log.

In some examples, the access log may include access records which includes information, such as a serial number of the access, a time of access, a location of an access point at which the access was done, an ID of the access card captured during the access, an ID of a user corresponding to the access card, first name and last name of the user, role of the user, designation of the user, etc. The access log may be stored in an access database and may be updated in real-time based on the accesses detected at various access points in the environment.

In some embodiments, after receiving the visitor request, the current location of the visitor is determined in real-time based on the access logs. For this determination, a search in the access log is performed based on the user ID of the visitor to ascertain a latest access record corresponding to the user ID. As may be understood, the last access record includes information about the location that was last accessed by the visitor. Particularly, the latest access record includes a location of the access point at which the access was done. Accordingly, the location of the access point as recorded in the latest access record is determined as the current location of the visitor.

At step 306, a current status of one or more access points associated with the environment is obtained in real-time from an operations database. The operations database, in an example, may be a part of a building management system and may include a current status of the various access points present within the system. The current status of an access point may be one of operational, faulty, under repair, under maintenance. As may be understood, 'operational' indicates that the access point is functional. 'Faulty' may indicate that the access point is non-functional. 'Under repair' may indicate that the access point is undergoing repair to restore its functionality. 'Under maintenance' may indicate that the access point is undergoing periodic or requested maintenance work, which may include updation of keys, software, etc. As may be understood, when the current status is one of 'faulty', 'under repair', and 'under maintenance', the corresponding area is not accessible to users/visitors. In some embodiments, the operations database may be accessed and a current status of the access points installed in the environment may be obtained.

At step 308, the information about the destination, the current location of the visitor, and the current status of the one or more access points associated with the environment are provided as an input to an AI-engine. In some embodiments, the AI-engine may be trained to generate a route to the destination based on the received input. For instance, the AI-engine may determine the route between the current location of the visitor and the destination. Once determined, the AI-engine may then use the information about the current status of the access points to optimize the route. For instance, the AI-engine may ascertain a current status of all the access points that are falling on the route. Accordingly, based on whether one or more of the access points are operational, or non-operational (faulty, under repair, or under maintenance), the AI-engine may optimize the route to avoid any passage block on the route to the destination. In some embodiments, the

As would be appreciated, the aforementioned is an example of optimization of the route by the AI-engine and the same is not to be construed as limiting in any manner. Other optimization techniques as known may be implemented in order to optimize/generate the route. In some embodiments, the step of optimization may be a sub-step of the generation of the route itself and the generated route may be an optimized route.

At step 310, a route to the destination of the visitor is received as an output from the AI engine. The route, as explained above, may be an optimized route that is determined by the AI-engine by application of at least one AI technique on the information about the destination, the current location of the visitor, and the current status of the one or more access points. In some examples, a controller of the visitor guidance system 102 may receive the route as an output from the AI-engine.

At step 312, the route is provided on a user device of the visitor. In some embodiments, the visitor guidance system transmits the route to the smartphone of the visitor. For instance, a link may be sent to the smartphone of the visitor. On clicking the link, a webpage displaying the route may be opened. In another instance, the route received from the visitor guidance system may be displayed in an interface of the client application of the smartphone. In some embodiments, audio instructions are also transmitted to the smartphone of the visitor along with the route. Accordingly, audio instructions pertaining to the route are provided to the visitor through the smartphone. In some embodiments, AR/VR/MR instructions are also provided on the smartphone or other compatible user device of the visitor. Accordingly, said AR/VR/MR instructions are provided to the visitor through the smartphone or the compatible device.

In some embodiments, the method 300 may further include generating/optimizing the route based on real-time user preferences. For instance, the kiosk or the client application may provide the visitor with an interface on which a list of preferences may be displayed. The list of preferences may include optimization options relating to the environment. For instance, considering a hospital as an environment, the list may include optimizations options for selecting/deselecting stairs, escalators, lifts, etc. The visitor may accordingly select/deselect one or more of the aforementioned optimization options from the interface. The selection/deselection may be passed onto the system 102 as user instructions including the real-time preferences. Accordingly, the system 102 may generate/update the route based on the real-time preferences of the visitor.

For instance, in case the visitor provides the real-time preferences at the same time instant while inputting the destination, the real-time preferences of the visitor are provided to the system 102 along with the visitor request. Thus, in such a case, the real-time preferences are passed to the AI engine and the route is accordingly generated.

In another example, the visitor may seek to provide real-time preference after the generation of the route. For instance, when the visitor is walking through the environment, the visitor may feel like taking stairs to the destination. Accordingly, the visitor may provide the user instruction specifying the preference for the stairs through the client application or through a kiosk, in real-time. In such a case, the user instruction is passed to the AI engine, which optimizes the route for the visitor based on this newly learnt visitor preference.

As would be understood, the real-time preference may be similar to or different than the visitor preferences stored in historical data associated with the visitor. Thus, in examples where the real-time preference is different than the stored visitor preference, the route for the visitor may be generated based on the real-time preference.

As mentioned above, the destination, the current location, and the current status of access points is provided as input to the AI engine for generating the route. In some embodiments, the method 300 may include generating the route by the AI engine based on data associated with the visitor. The data may include visitor behaviour data, visitor preference data, and visitor feedback data. The aforementioned data may be stored as historical data, say, in a visitor database implemented in the environment. The visitor database may include historical data corresponding to a plurality of registered/guest visitors and said data may be mapped with a user ID of the visitor.

Referring to the above embodiment, the historical data of the visitor may be fetched from the visitor database based on the user ID of the visitor. Herein, one or more of the visitor behaviour data, visitor preference data, and visitor feedback data may be fetched from the historical data corresponding to the visitor, as available in the visitor database. Subsequently, the aforementioned data is provided as input to the AI engine which applies one or more AI techniques on the historical data in addition to applying the AI techniques on one or more of the current location, the destination, and the current status, for generating the route.

For instance, from the behaviour data of a visitor X to a hospital, the AI engine may learn that the visitor X has a habit of first having coffee before going to an intended destination within the hospital. From the visitor preference data for the visitor X, the AI engine may learn that visitor X prefers stairs and from the feedback data for the visitor X, the AI engine may learn that visitor X does not like extreme AC spaces. Thus, while generating the route, the AI engine may factor in the above insights learnt from the historical data associated with the visitor X and may generate the route to the destination accordingly. In said example, the generated route may include stairs and may avoid corridors or passages where AC temperature is set to cold. Further, a stop near the coffee shop within the hospital may also be added prior to the destination.

As mentioned above, the destination, the current location, and the current status of access points is provided as input to the AI engine for generating the route. In some embodiments, in addition to the aforementioned input, the method 300 may include generating the route by the AI engine based on an access level associated with the visitor. The access level of the visitor may be determined from a user profile of the visitor stored in the visitor database. Herein, the visitor database may be accessed and based on the user ID of the visitor, the access level corresponding to the visitor may be ascertained. The ascertained access level is thereafter provided as an input to the AI engine.

In some embodiments, the AI engine factors in the access level of the visitor and generates the route accordingly. For instance, as per the visitor's access level, the visitor may not have permission to access area A and C of the environment which lie along the route to a destination D within the environment. Accordingly, the AI engine may generate the route such that area A and C are not included in the route to the destination D. Thus, security within the environment is maintained by use of AI driven intelligence implemented by the system 102. Further user experience is also enhanced. For instance, a situation is avoided in which the visitor would have reached entry to area A where entry to the area A would have been denied, resulting in re-routing of the route. This further adds to delays, inconvenience, and increased travel time to the destination.

Thus, by implementing the method 300 as explained above, the visitor guidance system 102 facilitates the visitor to reach the destination in an optimized manner, avoiding any blocks to the destination.

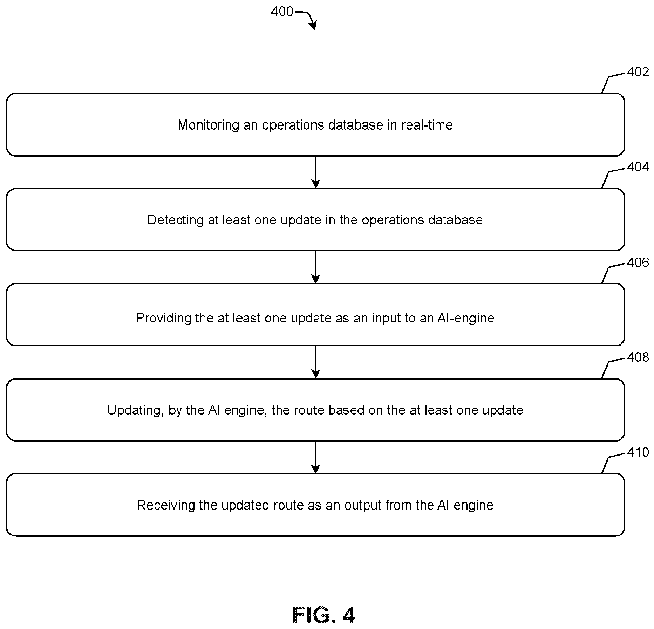

FIG. 4 illustrates a flowchart of a method 400 of updating a route to a destination within an environment, according to one or more embodiments of the present disclosure. The steps of the method 400, described in connection with the embodiments disclosed herein, may be embodied directly in hardware, in firmware, in a software module executed by the system 102, or in any practical combination thereof.

At step 402, operations database is monitored in real-time. As mentioned above, the operations database includes a current status of the various access points present within the system. In some embodiments, the operations database may be monitored in real-time to detect any change in a current status of an access point which lies on the route to the destination which the visitor intends to visit. In an implementation, the real-time monitoring may include continuously monitoring the operations database for detecting any change in the current status of the various access points. In another implementation, the real-time monitoring may include monitoring the operations database periodically, say, after every 2 seconds for detecting any change in the current status of the various access points. As may be understood, the real-time monitoring may be implementation specific and may be configurable, for example, by an administrator.

At step 404, at least one update in the operations database is detected. In an example, in case a current status of an access point which is related to the route is updated, the same is detected by the visitor guidance system 102. Herein, updates relating to current status of other access points which are not related to the route are not detected. Thus, the step of detection may involve analysing the route and determining the access routes which are related to the route. Accordingly, the current status of only those access points which are related to the route may be monitored and any change in at least one of these access points may be detected.

In an example, the change in the current status could depict that the access point was previously functional and is now non-functional (repair, maintenance, etc.). In another example, the change in the current status could depict that the access point was previously non-functional (repair, maintenance, etc.) and is now functional. Accordingly, the detected change in the current status of the access point may be used by the system 102 to optimize the route, as explained below.

At step 406, the at least one update in the operations database is provided as an input to the AI engine. As mentioned above, the AI engine generates the route to the destination which the visitor intends to visit in the environment. Thus, in order to optimize the route for the visitor, the system 102 may provide the detected at least one update as an input to the AI engine. The AI engine, in some embodiments, may be trained for optimizing the route based on the updates occurring within the environment. Accordingly, the AI engine may process the received input about the update in the operations database for updating the route, as required.

At step 408, the route may be updated by the AI engine based on the at least one update. For instance, if an access point A falling on the route is now non-functional, the AI engine may select an alternate access point B which causes minimum deviation in the route, and may accordingly update the route to include directions to access point B instead of access point A. In another example, if an access point A falling on the route was previously non-functional and now becomes functional, and said access point A provides shorter route to the destination, the AI engine may update the route to include the directions through the access points A.

At step 410, an output including the updated route is received. In an example, the controller 104 may receive the updated route from the AI engine 106. Subsequently, the controller 104 may provide the updated route to the user device of the visitor.

Thus, the visitor is provided with an optimized route at all times, according to the aspects of the method 400 as described above.

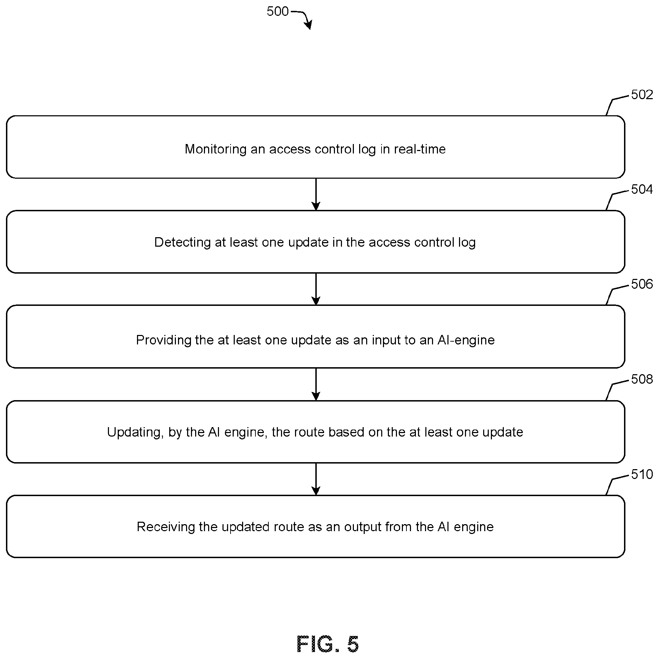

**FIG.** 5 illustrates a flowchart of a method 500 of updating a route to a destination within an environment, according to one or more embodiments of the present disclosure. The steps of the method 500, described in connection with the embodiments disclosed herein, may be embodied directly in hardware, in firmware, in a software module executed by the system 102, or in any practical combination thereof.

At step 502, access control log is monitored in real-time. As mentioned above, the access control log includes information about the access events relating to the visitor/people present in the environment. In some embodiments, the access control log may be monitored in real-time to ensure that the visitor is traversing the route to the destination, as provided on the user device of the visitor. For instance, the route to a destination A within the environment B may include access points A1, B1, C1, D2, E1, in this order. Accordingly, the access control log may be monitored to analyze the access events for the visitor to ensure that the visitor is following the route through the aforementioned access points in the environment. In case the visitor is following the access points in the order as per the route, the same is determined as the visitor following the route to the destination. Any deviation from the aforementioned access points may be deemed as a deviation from the route provided to the visitor. Thus, the action of monitoring may be understood as monitoring the access events of the visitor based on the order of the access points falling along the route to the destination which the visitor intends to visit.

In an implementation, the real-time monitoring may include continuously monitoring the access control log for detecting compliance/deviation from the route. In another implementation, the real-time monitoring may include monitoring the access control log periodically, say, after every 2 seconds for detecting compliance/deviation from the route. As may be understood, the real-time monitoring may be implementation specific and may be configurable, for example, by an administrator.

At step 504, at least one update in the access control log is detected. In an example, as long as the visitor is traversing through the environment to the destination in the order of the access points related to the route, no update is detected. In another example, when an access event associated with the visitor which indicates entry at an access point which is not related to the route is recorded in the access control log, an update in the access control log may be detected. Herein, the update is indicative of a deviation of the visitor from the route.

For instance, as mentioned in the above example, the route to the destination A within the environment B may include access points A1, B1, C1, D2, E1, in this order. Now on monitoring the access control log in real-time, in case the visitor traverses through the access points in the aforementioned order, no update is detected. In another case, the visitor may traverse as follows: from A1 to B1 to C3. Herein, when the access event corresponding to entry at C3 is recorded in the access control log, the system 102 may detect an update in the access control log as C3 does not match with the original set of access points related to the route.

In another example, even a deviation in the order of the access points related to the route may be deemed as a deviation from the route and accordingly an update may be detected in the access control log. For instance, the visitor may traverse as follows: A1 to B1 to C1 to E1. Herein, as soon as the access event corresponding to the access point E1 is recorded in the access control log, the system 102 may determine that the visitor is not moving as per the order of the access points related to the route. Accordingly, the update indicative of the deviation of the visitor from the route is detected by the system 102.

At step 506, the update detected in the access control log is provided as an input to an AI-engine. As mentioned above, the AI engine generates the route to the destination which the visitor intends to visit in the environment. In an example, in order to optimize the route for the visitor, the system 102 may provide the detected update in the access control log as an input to the AI engine. The AI engine, in some embodiments, may be trained for optimizing the route based on the updates occurring within the environment. Accordingly, the AI engine may process the received input about the update in the access control log for updating the route, as required.

At step 508, the route may be updated by the AI engine based on the at least one update. In an example, on receiving the update as input, the AI engine may determine a latest location of the visitor. For instance, the AI engine may identify the location of the access point at which the latest access event of the visitor had occurred based on the update. Accordingly, the AI engine may set the latest location, thus determined, as the current location of the visitor and may accordingly update the route to the destination. In some examples, the updating of the route may include giving directions to the visitor to return to the original route. In another example, the updating of the route may include generating a new route based on the latest location and the destination intended to be visited by the visitor.

At step 510, the updated route is received as an output from the AI engine. In an example, the controller 104 may receive the updated route from the AI engine 106. Subsequently, the controller 104 may provide the updated route to the smartphone of the visitor.

Thus, the visitor is provided with an optimized route at all times, according to the aspects of the method 500 as described above.

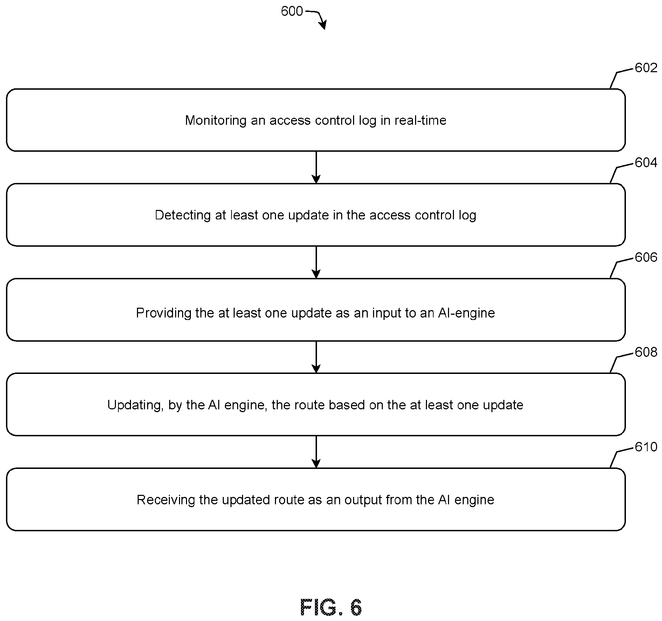

**FIG. 6** illustrates a flowchart of a method 600 of updating a route to a destination within an environment, according to one or more embodiments of the present disclosure. The steps of the method 600, described in connection with the embodiments disclosed herein, may be embodied directly in hardware, in firmware, in a software module executed by the system 102, or in any practical combination thereof.

At step 602, access control log is monitored in real-time. As mentioned above, the access control log includes information about the access events relating to the visitor/people present in the environment. In some embodiments, the access control log may be monitored in real-time to ensure that the person being visited is indeed at the designated destination corresponding to the person. For instance, consider a case where a visitor A intends to meet a doctor B in a hospital. The doctor B may be allocated a designated room C in the hospital where he meets the visitors. Therefore, a default destination of room C may be stored in a mapped relationship with the user profile of the doctor B in a database of a BMS implemented by the hospital.

In the above example, consider a case where the doctor B has scheduled an appointment with the visitor A. Accordingly, when the visitor A generates a visitor request on visiting the hospital to meet the doctor B, the default destination is picked as room C. However, consider a case where the doctor B may be in a coffee shop D in the hospital. In such a scenario, the visitor A would end up at room C, whereas the doctor B is present at coffee shop D. Thus, to avoid such a scenario, the access control log may be monitored in real-time and accordingly, the route may be generated based on real-time location rather than pre-stored designated location, as explained in below steps. Thus, the action of monitoring may be understood as monitoring the access events of the person to determine the destination of the person in real-time.

In an implementation, the real-time monitoring may include continuously monitoring the access control log for determining the real-time location of the person. In another implementation, the real-time monitoring may include monitoring the access control log periodically, say, after every 2 seconds for determining the real-time location of the person. As may be understood, the real-time monitoring may be implementation specific and may be configurable, for example, by an administrator.

At step 604, at least one update in the access control log is detected. In an example, as long as the person being visited is at the designated destination, no update is detected in the access control log. In another example, when an access event associated with the person being visited indicates his entry at an access point which is not the designated destination for the person, an update in the access control log may be detected. Herein, the update indicates that the person is no longer at the designated destination, but has moved to a new destination. Thus, the update is indicative of an update in the destination for the visitor.

At step 606, the update detected in the access control log is provided as an input to an AI-engine. As mentioned above, the AI engine generates the route to the destination which the visitor intends to visit in the environment. In an example, in order to optimize the route for the visitor, the system 102 may provide the detected update in the access control log as an input to the AI engine. The AI engine, in some embodiments, may be trained for optimizing the route based on the updates occurring within the environment. Accordingly, the AI engine may process the received input about the update in the access control log for updating the route, as required. For instance, the AI engine set the newly detected destination as the destination for route generation.

At step 608, the route may be updated by the AI engine based on the at least one update. In an example, on receiving the update as input, the AI engine may determine a latest location of the person being visited. For instance, the AI engine may identify the location of the access point at which the latest access event of the person being visited had occurred based on the update. Accordingly, the AI engine may set the latest location, thus determined, as the destination for the visitor and may accordingly update the route to the destination.

At step 610, the updated route is received as an output from the AI engine. In an example, the controller 104 may receive the updated route from the AI engine 106. Subsequently, the controller 104 may provide the updated route to the smartphone of the visitor.

Thus, the visitor is provided with an optimized route at all times, according to the aspects of the method 600 as described above.

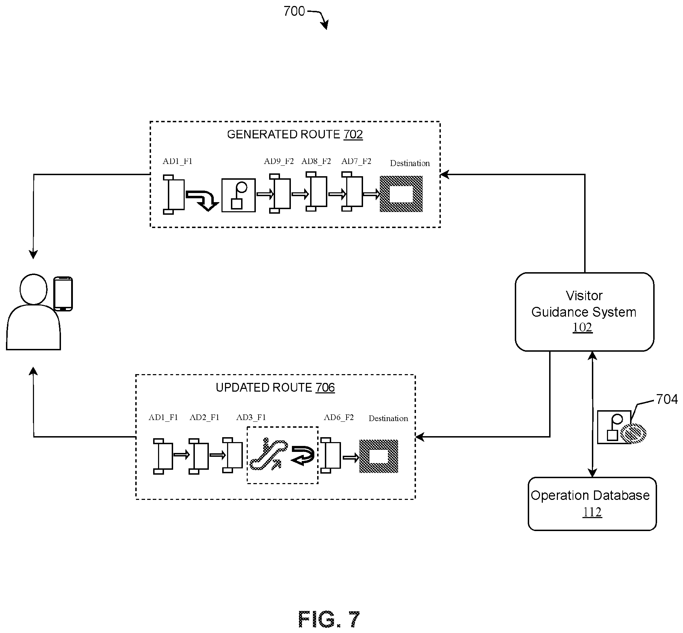

**FIG. 7** illustrates a use case 700 depicting implementation of the system 102, according to some embodiments of the present disclosure. The use case 700 illustrates an environment which may be a hospital implementing the system 102, a plurality of floors F1-F2 and a plurality of access doors AD1....ADM and AD2.... ADM corresponding to first floor and second floor respectively in the hospital, operational database 112 and visitor/user device of the visitor.

In an example, the system 100 may be implemented in the hospital for guiding visitors in the hospital to their intended destination. Accordingly, the system 102 may generate a route for the visitor to his intended destination based upon at least one of current location of the visitor, information about a destination in the environment which the visitor intends to visit and status of one or more access points associated with the environment. For example, the visitor X wants to visit a path lab situated next to the access door 7 on the second floor of the hospital. The system may generate a route which says head to AD1_F1 followed with right turn, then take a lift for the second floor and head straight to AD9_F2 to AD8_F2 to AD7_F2. The destination may be right next to AD7_F2.

The system 102 may periodically monitor the operation database 112 to detect any change in a current status of an access points which lies on the route to the destination proposed to the visitor. In an example, the updates related to the access points may be provided in every 2 mins. Accordingly, the system 102 is provided with an update that lift on the first floor next to the access door AD1 is not working and needs maintenance. The AI engine upon receiving said update may generate an optimized route for the visitor. The AI engine would further check for the current location of the visitor and based upon the access point update, will generate an optimized route. In an example, the system may detect that the current location of visitor is the same as at the time of generation of route for the first time.

The system 102 may then provide the visitor with an updated route which does not include said access point, i.e., lift in order to let the visitor reach the destination without any delay. The system 102, accordingly, suggested the updated route as head to AD1_F1 then to AD2_F1 instead of taking a right turn to take the lift, then AD3_F1 followed by escalators to second floor. Then take a right turn to AD6_F2. The destination of the visitor may be right next to AD6_F2.

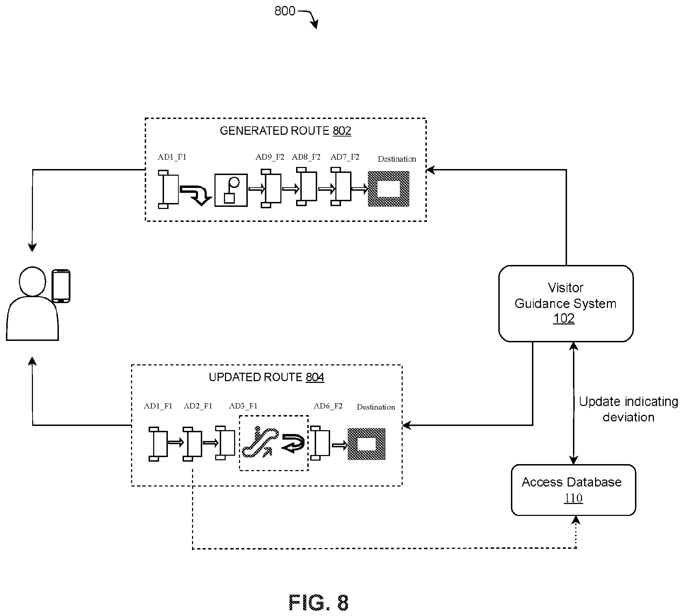

**FIG. 8** illustrates a use case 800 depicting implementation of the system 102, according to some embodiments of the present disclosure. The use case 800 illustrates an environment which may be a hospital implementing the system 102, a plurality of floors F1-F2 and a plurality of access doors AD1....ADM and AD2.... ADM corresponding to first floor and second floor respectively, lift, escalator, in the hospital, access database 112 and visitor/user device of the visitor.

In an example, the system 100 may be implemented in the hospital for guiding visitors in the hospital to their intended destination. Accordingly, the system may generate a route for the visitor to his intended destination based upon at least one of current location of the visitor, information about a destination in the environment which the visitor intends to visit and status of one or more access points associated with the environment. For example, the visitor X wants to visit a path lab situated next to the access door 7 on the second floor of the hospital. The system may generate a route which says head to AD1_F1 followed with right turn, then take a lift for the second floor and head straight to AD9_F2 to AD8_F2 to AD7_F2. The destination may be right next to AD7_F2.

The system 102 may periodically monitor the access control log in the access database 112 in real-time to ensure that the visitor is traversing the route to the destination, as provided on the user device of the visitor X. In an example, the updates related to the access control log for detecting compliance/deviation from the route may be provided to the system in every 2 mins. Accordingly, the system 102 is provided with an update that instead of taking a lift on the first floor next to the access door AD1, the visitor is going straight and used the AD2_F1. The AI engine upon receiving said update may generate an optimized route for the visitor.

The system 102 may then provide the visitor with an updated route which does not include said access point, i.e., lift in order to let the visitor reach the destination without any delay. The system 102, accordingly, suggested the updated route as head to AD3_F1 from the AD3, F1 followed by escalators to second floor. Then take a right turn to AD6_F2. The destination of the visitor may be right next to AD6_F2.

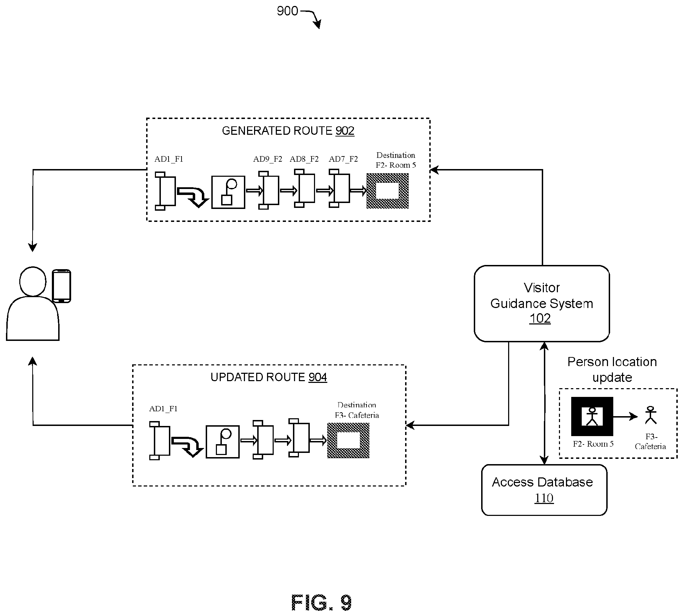

**FIG.** 9 illustrates a use case 900 depicting implementation of the system 102, according to some embodiments of the present disclosure. The use case 800 illustrates an environment which may be a hospital implementing the system 102, a plurality of floors F1-F2 and a plurality of access doors AD1....ADM and AD2.... ADM corresponding to first floor and second floor respectively, lift, escalator, in the hospital, access database 112 and visitor/user device of the visitor.

In an example, the system 100 may be implemented in the hospital for guiding visitors in the hospital to their intended destination. Accordingly, the system may generate a route for the visitor to his intended destination based upon at least one of current location of the visitor, information about a destination in the environment which the visitor intends to visit and status of one or more access points associated with the environment. For example, the visitor X wants to visit a cardiologist sitting next to the access door 7 on the second floor of the hospital. The system may generate a route which says head to AD1_F1 followed with right turn, then take a lift for the second floor and head straight to AD9_F2 to AD8_F2 to AD7_F2. The destination may be right next to AD7 _F2.

The system 102 may periodically monitor the access control log in the access database 112 in real-time to ensure that the person being visited is indeed at the designated destination corresponding to the person. For example, the visitor X in the present case wanted to meet the cardiologist sitting on the third floor in his designated room. Therefore, a default destination of the cardiologist may be stored in a mapped relationship with the user profile of said cardiologist in the database of a BMS implemented by the hospital. Therefore, the system 102 may have generated the route based upon the default destination of said room as provided in his user profile. In an example, the cardiologist may have moved from his designated room to the cafeteria. In an example, the updates related to the access control log for detecting the location of the person being visited may be provided to the system in every 2 mins. Accordingly, when the cardiologist indicates his entry at an access point which is not the designated destination for him, an update in the access control log is provided to the system. Accordingly, the system 102 is provided with an update that instead of his designated room, the cardiologist is in the cafeteria on second floor. The AI engine upon receiving said update may generate an optimized route for the visitor.

The system 102 may then provide the visitor with an updated route to the cafeteria instead of the room of the cardiologist in order to avoid inconvenience to the visitor. The system 102, accordingly, suggested the updated route as go to cafeteria right next to AD8_F2. The visitor need not to go to AD9_F2 and then to the designated room of the cardiologist.

The visitor guidance systems and methods, in some embodiments, may implement AI-based techniques, algorithms, Natural Language processing algorithms, Machine learning algorithms, and the like. The system provides at least the following advantages:
1. Improved Visitor Experience: The system provides visitors with clear and personalized instructions, reducing confusion and improving their overall experience within the campus.
2. Time and Resource Efficiency: By automating the guidance process, the system reduces the need for manual assistance.
3. Real-Time Adaptability: The system continuously monitors the building environment and can provide real-time updates and alerts to visitors
4. Personalized and Context-Aware Guidance: The system considers visitor preferences, accessibility requirements, and real-time factors to provide personalized and context-aware instructions.
5. Optimal Path Recommendations: By utilizing machine learning algorithms, the system can analyze historical data, visitor behavior, and real-time information to suggest the most efficient routes.
6. Natural Language Processing: The integration of NLP techniques enables the system to understand and respond to spoken language inputs from visitors. This natural and human-like interaction enhances user-friendliness and ensures effective communication between visitors and the system.
7. Continuous Improvement: The system collects and analyzes data from visitor interactions, including feedback and user ratings. This data is utilized to improve the accuracy and effectiveness of the voice and display guidance system over time. The system adapts and learns from user feedback, making it more efficient and reliable.
8. Enhanced Security: The system can integrate with existing access control systems, ensuring that visitors are directed to authorized areas while maintaining the security of restricted zones. The system helps ensure visitors follow the designated paths and access only the areas they are permitted to enter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. An Artificial Intelligence (AI) based visitor guidance system for guiding visitors in an environment, comprising:
one or more processors configured to:
receive a visitor request comprising information about a destination in the environment which a visitor intends to visit;
determine a current location of the visitor based on an access control log, the access control log comprising one or more access events associated with the visitor;
obtain, in real-time from an operations database, a current status of one or more access points associated with the environment;
provide the information about the destination, current location of the visitor and the current status of the one or more access points associated with the environment as an input to an AI-engine;
receive, as an output from the AI engine, a route to the destination of the visitor, the route being determined by application of at least one AI technique on one or more of the information about the destination, current locations of the visitor and the current status of the one or more access points associated with the environment; and
provide, using at least one multimedia output, the generated route on a user device of the visitor.

2. The system of claim 1, wherein the one or more processors are further configured to:
receive, a user instruction comprising a real-time user preference pertaining to the route;
provide the user instruction as an input to the AI-engine;
generate/update, by the AI engine, the route based on the real-time user preference included in the user instruction; and
receive, as an output from the AI engine, the generated/updated route for providing to the user device of the visitor;

3. The system of claim 1, wherein the visitor request further comprises a user identity (ID), wherein the one or more processors are further configured to:
access historical data associated with the visitor based on the user ID, the historical data comprising data indicative of one or more of: visitor behavior, visitor preferences, and visitor feedback;
provide the historical data associated with the visitor as an input to the AI-engine; and
generate, by the AI engine, the route based on the historical data associated with the visitor.

4. The system of claim 1, wherein the visitor request further comprises a user identity (ID), wherein the one or more processors are further configured to:
ascertain an access level for the visitor based on the user ID, the access level being indicative of a security clearance level of the visitor;
provide the access level for the visitor as an input to the AI-engine; and
generate, by the AI engine, the route based on the ascertained access level.

5. The system of claim 1, wherein the one or more processors are further configured to:
monitor, in real-time, the operations database;
detect at least one update in the operations database, wherein the at least one update corresponds to a current status of an access point associated with the route;
provide the detected at least one update in the operations database as an input to the AI-engine;
update, by the AI engine, the route based on the detected at least one update; and
receive, as an output from the AI engine, the updated route for providing to the user device of the visitor.

6. The system of claim 1, wherein the one or more processors are further configured to:
monitor, in real-time, the access control log;
detect at least one update in the access control log, wherein the at least one update corresponds to one or more access events that are indicative of the visitor's deviation from the route;
provide the detected at least one update in the access control log as an input to the AI-engine;
update, by the AI engine, the route based on the detected at least one update; and
receive, as an output from the AI engine, the updated route for providing to the user device of the visitor.

7. The system of claim 1, wherein the access control log further comprises one or more access events associated with a person being visited by the visitor at the destination in the environment, wherein the one or more processors are further configured to:
monitor, in real-time, the access control log;
detect at least one update in the access control log, wherein the at least one update corresponds to one or more access events that are indicative of the person's location at another destination within the environment;
provide the detected at least one update in the access control log as an input to an AI-engine;
update, by the AI engine, the route based on the detected at least one update; and
receive, as an output from the AI engine, the updated route for providing to the user device of the visitor.

8. A method of guiding visitors in an environment, comprising:
receiving, by one or more processors, a visitor request comprising information about a destination in the environment which a visitor intends to visit;
determining a current location of the visitor based on an access control log, the access control log comprising one or more access events associated with the visitor;
obtaining, in real-time from an operations database, a current status of one or more access points associated with the environment;
providing the information about the destination, the current location of the visitor, and the current status of the one or more access points associated with the environment as an input to an AI-engine;
receiving a route to the destination of the visitor as an output from the AI engine, the route being determined by application of at least one AI technique on one or more of the information about the destination, the current location of the visitor, and the current status of the one or more access points associated with the environment; and
providing the route on a user device of the visitor.

9. The method of claim 8, further comprising:
receiving a user instruction comprising a real-time user preference pertaining to the route;
providing the user instruction as an input to the AI-engine;
generating/updating, by the AI engine, the route based on the real-time user preference included in the user instruction; and
receiving the generated/updated route as an output from the AI engine for providing to the user device of the visitor.

10. The method of claim 8, wherein the visitor request further comprises a user identity (ID), the method further comprising:
accessing historical data associated with the visitor based on the user ID, the historical data comprising data indicative of one or more of: visitor behavior, visitor preferences, and visitor feedback;
providing the historical data associated with the visitor as an input to the AI-engine; and
generating, by the AI engine, the route based on the historical data associated with the visitor.

11. The method of claim 8, wherein the visitor request further comprises a user identity (ID), the method further comprising:
ascertaining an access level for the visitor based on the user ID of the visitor, the access level being indicative of a security clearance level of the visitor;
providing the access level for the visitor as an input to the AI-engine; and
generating, by the AI engine, the route based on the ascertained access level.

12. The method of claim 8, further comprising:
monitoring, in real-time, the operations database;
detecting at least one update in the operations database, wherein the at least one update corresponds to a current status of an access point associated with the route;
providing the detected at least one update in the operations database as an input to the AI-engine;
updating, by the AI engine, the route based on the detected at least one update; and
receiving the updated route as an output from the AI engine, for providing to the user device of the visitor.

13. The method of claim 8, further comprising:
monitoring, in real-time, the access control log;
detecting at least one update in the access control log, wherein the at least one update corresponds to one or more access events that are indicative of the visitor's deviation from the route;
providing the detected at least one update in the access control log as an input to the AI-engine;
updating, by the AI engine, the route based on the at least one update; and
receiving the updated route as an output from the AI engine for providing to the user device of the visitor.

14. The method of claim 8, wherein the access control log further comprises one or more access events associated with a person being visited by the visitor at the destination in the environment, the method further comprising:
monitoring, in real-time, the access control log;
detecting at least one update in the access control log, wherein the at least one update corresponds to one or more access events that are indicative of the person's location at another destination within the environment;
providing the detected at least one update in the access control log as an input to an AI-engine;
updating, by the AI engine, the route based on the detected at least one update; and
receiving the updated route as an output from the AI engine for providing to the user device of the visitor.

15. A computer-readable medium having computer-executable instructions stored thereon that, when executed by a processing system, cause the processing system to:
receive a visitor request comprising information about a destination in the environment which a visitor intends to visit;
determine a current location of the visitor based on an access control log, the access control log comprising one or more access events associated with the visitor;
obtain, in real-time from an operations database, a current status of one or more access points associated with the environment;
provide the information about the destination, the current location of the visitor and the current status of the one or more access points associated with the environment as an input to an AI-engine;
receive, as an output from the AI engine, a route to the destination of the visitor, the route being determined by application of at least one AI technique on one or more of the information about the destination, the current locations of the visitor and the current status of the one or more access points associated with the environment; and
provide the generated route on a user device of the visitor.
